# EUROPEAN PATENT SPECIFICATION

(11) **EP 0 561 982 B1**
(45) Date of publication and mention of the grant of the patent: **29.03.1995**
(21) Application number: 92902083.2
(22) Date of filing: 29.11.1991
(51) Int. Cl.: B65D 75/58

(54) **PACKAGE COMPRISED OF ENVIRONMENTALLY COMPATIBLE MATERIAL AND CONTAINING COMPRESSED FLEXIBLE ARTICLES**
VERPACKUNG AUS UMWELTFREUNDLICHEM MATERIAL FÜR GEPRESSTE, FLEXIBLE ARTIKEL
EMBALLAGE COMPRENANT UN MATERIAU INOFFENSIF POUR L'ENVIRONNEMENT ET CONTENANT DES ARTICLES FLEXIBLES COMPRIMES

(30) Priority: 10.12.1990 US 625327
(43) Date of publication of application: 29.09.1993
(73) Proprietor: THE PROCTER & GAMBLE COMPANY, Cincinnati, Ohio 45202 (US)
(72) Inventor: MUCKENFUHS, Delmar, Ray, Middletown, OH 45044 (US)
(74) Representative: Canonici, Jean-Jacques
(86) International application number: US9108924
(87) International publication number: WO9210412

(56) References cited:
- EP-A- 0 141 555
- EP-A- 0 190 776
- EP-A- 0 349 050
- EP-A- 0 406 928
- US-A- 3 859 125

## Description

### TECHNICAL FIELD

The present invention relates to a package which is suitable for containing compressed flexible articles and which, upon disposal, is more compatible with the environment. More particularly the present invention relates to such a package employing polyvinyl alcohol or any suitable material that is water soluble or dispersible and has thermoplastic characteristics to reinforce, support and seal the various components of the package.

### BACKGROUND ART

Flexible articles like, for example, single use diapers. catamenial pads and incontinent briefs are often packed in either cardboard boxes or flexible bags made of plastic film. On the negative side, cardboard is heavy, taking up more space than plastic and has less flexibility for storing since it is rigid. In use such cardboard containers continue to take up the same amount of space. even when nearly empty. On the positive side, cardboard does have the advantage of being compostable, biodegradable and recyclable Furthermore, a number of cardboard and paper recycling facilities are currently in place.

Plastic bags, are one alternative to cardboard containers. They are lighter and allow more flexibility, but are not currently compostable or biodegradable and are preferably recycled to minimize their impact on the environment. Unfortunately, there are at present only a limited number of plastic recycling facilities in place.

In order to decrease the total quantity of packaging material needed for packaging the flexible articles, it has been found advantageous to compress the articles prior to packaging Compressing the flexible articles leads to a reduction in the total amount of empty packaging material to be disposed of and has the added advantage of reduced costs, since less packaging material is employed.

To be more environmentally compatible, manufacturers have begun to use paper instead of plastic film or cardboard for the packaging material of the compressed flexible articles. However, experience to date has shown that when using paper as the packaging material on compressed flexible articles, it is often difficult for the package to be opened cleanly along the perforated lines of the opening device. Perforation lines in paper tend to cause the paper to tear along the randomly oriented paper fibers in an unpredictable manner, instead of along the perforations. An integral guide is therefore often included to overcome the influence of the random fiber orientation on the direction of tear, thereby enabling the package to be opened cleanly along the perforations. However, this guide is often made of a material that is not recyclable, compostable or biodegradable and must be removed from the package before the package can be properly disposed of by any of the aforementioned techniques.

If the aforementioned problem is attacked by making the perforations weak enough to provide reliable tearing along the line of weakness, then the relatively weak perforations in paper packages tend to prematurely rupture prior to opening when under the stress of the compressed flexible articles. To alleviate the aforementioned problems, some packages have gone away from the perforations concept and gone to a tear strip type opening system. Unfortunately, this tear strip, like the tear guides described above, is often made of a material that is not recyclable, compostable or biodegradable and must be removed from the package before the package can be properly disposed of.

A flexible bag for compressed articles of the type described in the prior art portion of claim 1 is known, in which the bag has an opening device extending into the side panel. This was disclosed in more detail in EP-A 349 050, published on January 3rd, 1990.

EP-A 425 008, claiming priority from an earlier British application having an application date of October 23rd 1989, is prior art within the meaning of Article 54(3) EPC. It discloses a paper package using a reinforcement sheet to withstand the internal forces of the compressed flexible articles. A reinforcement sheet, made of a biodegradable, compostable or recyclable material underlies the easy opening feature of the package and supports the perforations in the paper package opening system prior to the opening.

US Patent 4 512 478 issued to Korte on April 23rd, 1985 discloses a paperboard carton with an improved perforated opening.
This patent teaches coating the inside surface of the carton on each side of the perforations with a plastically deformable material. The coating material may be a varnish, lacquer or polyurethane. However, these coating materials are not readily recyclable, compostable or biodegradable and therefore are not ideally suited for an optimum environmentally compatible package.

Even ignoring the materials which have been used to provide an easy opening feature, not all of the materials that go into currently used paper packages are recyclable, compostable or biodegradable. The seams of the paper package are often sealed together with a hot melt glue that may not be environmentally compatible. In order for the paper package to be completely recycled the package must somehow first be stripped of the hot melt glue before it is ready for the recycling procedure.

As the general public is becoming more aware of the environmental issues facing the world today, there is a growing concern over the disposal of the materials used to package the products we consume daily. Terms such as compostable, biodegradable and recyclable are becoming very common throughout the world as concern for the environment grows. Much of the packaging material used on the market today for compressed flexible articles is plastic. However, most plastics which are currently commercially available are not compostable or biodegradable. Although recycling of plastic is technically feasible, many problems exist in both the logistics and the many different types of plastic material on the market today. An ideal packaging material from an environmental compatibility standpoint is paper, which is made from a totally renewable natural resource. Paper is also compostable, biodegradable and recyclable, so it offers many viable options for disposal.

However, paper does have several inherent limitations that make direct replacement of plastic in many packaging applications difficult or impractical. One such limitation is that paper is not directly heat seal able as are most plastics. This would prevent paper from being used on present heat sealing equipment that is being used for plastic packages without major equipment modifications. Another area in which paper is limited is that paper packages do not generally open well when they have a pre-weakened perforated opening flap to assist in initial opening and/or removal of the product. When a pre-weakened area is made fragile enough to work reliably it has a tendency to rupture prematurely during normal shipping and handling of the package. This is particularly true when the package contains materials such as single use diapers that are packaged under compression, since this results in tension being applied to the packaging material.

### OBJECTS OF THE INVENTION

Accordingly, it is an object of this invention to provide a package containing compressed flexible articles that is completely compatible for disposal via all of the known systems, i.e., composting, biodegrading and recycling.

It is a further object of this invention to provide such a package that is made primarily of paper.

It is a further object of this invention to provide such a package having an easy open device including perforations which are supported and reinforced by a compostable, biodegradable and recyclable substance having thermoplastic characteristics, preferably polyvinyl alcohol.

It is a further object of this invention to provide such a package which employs polyvinyl alcohol or any similar material that is water soluble or dispersible and which has a thermoplastic characteristic to assemble, seal, reinforce and support various portions of the package, particularly in the handle area.

The aforementioned and other objects of the present invention will become more apparent hereinafter.

### SUMMARY OF THE INVENTION

In accordance with a preferred embodiment of the present invention there is provided a substantially rectangular paper package containing compressed flexible articles. The package has a front and a back panel connected to one another by means of a pair of side panels, a bottom panel and a top panel. In a particularly preferred embodiment, a carrying device extends from or is positioned above the top panel.

An easy opening device comprising a line of weakness is located within one of the side panels of the flexible package and may extend through the top panel. The line of weakness, which is preferably comprised of perforations, defines a predetermined portion of the side panel to be at least partially separated from remainder of the side panel without releasing the tension in the remainder of the side panel.

A layer of polyvinyl alcohol is preferably applied in the area of the line of weakness to reinforce it against premature rupture due to the high tensile forces which are present during shipping and handling operations. The carrying device can also, if desired, be reinforced with polyvinyl alcohol to increase its resistance to tearing. In addition, the polyvinyl alcohol can be pattern printed onto the flat bag blank prior to assembly and used to seal the fully assembled bag into its erected configuration.

The predetermined portion of the side panel is at least partially separated from the remainder of the side panel by applying a grasping force to the easy opening device, causing rupture along the line of weakness. The portion of the flexible articles coinciding with the aperture thus formed in the side panel automatically expand through the aperture in a fan-like array while the portion of the flexible articles coinciding with the remaining tensioned portion of the side panel are retained in a substantially compressed condition.

Despite its ability to reinforce the line of weakness against premature rupture under tensile loads, the polyvinyl alcohol reinforcement does not significantly detract from the user's ability to rupture the package along the line of weakness, since a shear force is applied to activate the easy opening device.

### BRIEF DESCRIPTION OF THE DRAWINGS

While the specification concludes with claims particularly pointing out and distinctly claiming the subject invention, it is believed that the same will be better understood by the following description taken in conjunction with the accompanying drawings in which:
Figure 1 is a simplified perspective view of a package of the present invention comprising a side gussetted paper bag containing compressed flexible articles;
Figure 2 is a flat paper blank from which a bag of the type shown in Figure 1 can be assembled;
Figure 2A is an alternative flat paper blank from which a bag of the type generally shown in Figure 1 can be assembled;
Figure 3 is a view showing a preferred construction for a reinforcing patch used on the carrying device;
Figure 4A is a cross sectional view showing the application of the polyvinyl alcohol to the portion of the bag blank including the opening device perforations;
Figure 4B is a cross sectional view showing another application of the polyvinyl alcohol to the portion of the bag blank including the opening device perforations; and
Figure 5 is simplified perspective view of a package of the present invention showing the handle patch extending into the front and back panels of the bag.

### DESCRIPTION OF THE PREFERRED EMBODIMENTS

While the present invention will be described in a context of providing an environmentally compatible paper package containing a stack of compressed folded single use absorbent diapers, the present invention is in no way limited to such application. As pointed out earlier herein, the present invention may be practiced to greatest advantage to provide reduced storage, shipping and handling costs in any situation involving flexible articles which are substantially compressible in at least one of their dimensions, such as their thickness. In addition, the present invention can be practiced to great advantage to provide automatically assisted dispensing of discrete flexible articles one at a time or in multiples due to the action of the compressive forces acting upon the flexible articles during a substantial portion of the bag's usable life. The detailed description contained herein, which relates to a particularly preferred flexible paper bag of compressed single use diapers, will allow one skilled in the art to readily adapt the invention to other uses.

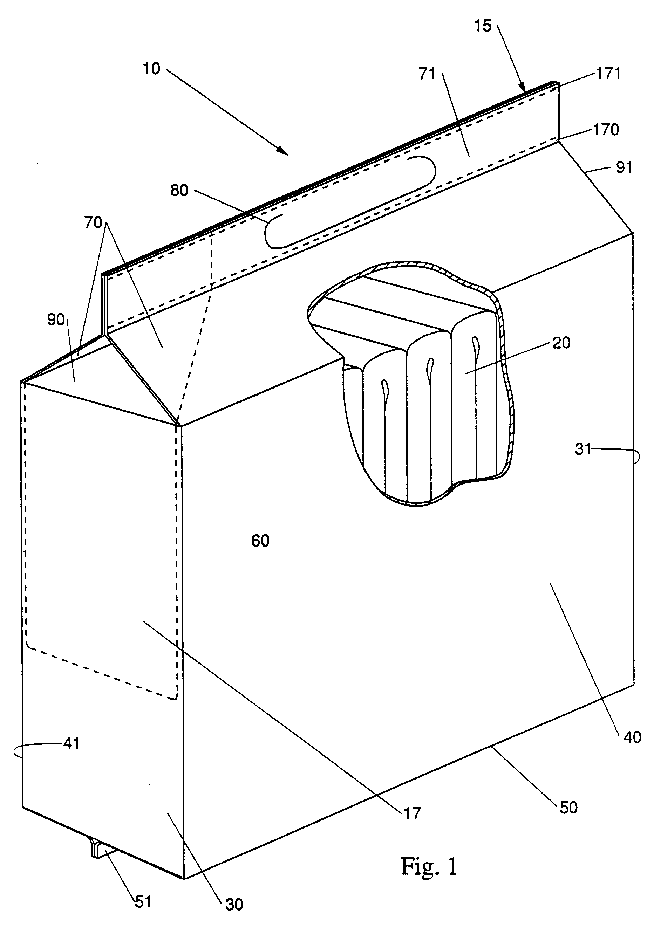

Fig. 1 is a simplified perspective illustration of a particularly preferred embodiment 10 of an easy open environmentally compatible flexible paper bag of compressed flexible articles 20 of the present invention. The compressed flexible articles 20 may comprise single use absorbent diapers such as those disclosed in commonly assigned U.S. Patent 3,860,003 issued to Buell on January 14, 1975 and hereby incorporated herein by reference. Prior to stacking and insertion into the bag, the diapers 20, which are preferably of an hourglass shape, are typically folded one or more times in a direction generally parallel to the machine direction during converting so that the ears of each hourglass shaped diaper overlie a central portion of the diaper. The diapers 20 are also preferably folded about their mid-point after being cut from a continuous web and prior to being collected into stacks. The resultant cross-section of each stack of diapers 20 is substantially rectangular and substantially coincides with the shape of side panels 30 and 31 of the flexible paper bag 15.

Prior to insertion into the flexible bag 15, the stack of folded single use diapers 20 are preferably subjected to compression to reduce the overall dimension of the stack by as much as 50% or more relative to the uncompressed height of the stack. It has been learned that the relatively high levels of compression of single use absorbent articles can be performed without introducing any appreciable lasting negative effects to the individual articles, provided the articles are not caused to undergo yielding during the compression step. Experience has demonstrated that the risk of causing yielding is minimal if the compression step is carried out while the articles are in stacks. Accordingly, diapers compressed while in the stack and thereafter retained under a degree of compression in easy open flexible paper bags of the present invention typically reach the end user without suffering any lasting negative effects as a result of the compression.

As can be seen in Fig. 1, the stack of compressed flexible articles 20 is maintained in a compressed state by opposing side panels 30 and 31 which are joined to front panel 40, back panel 41 and bottom panel 50. Accordingly, side panels 30 and 31, front panel 40 and back panel 41 remain in tension at least until the compressive forces acting upon the compressed flexible articles 20 remaining in the bag have been relieved.

In Fig. 1, front panel 40 and back panel 41 are joined to form top portion 70 of flexible bag 15. Gussets 90 and 91 are the result of front panel 40 and back panel 41 being folded to form top portion 70. Top portion 70 extends further into carrying device 71 which includes a grip-hole cutout 80 which can be outwardly folded for convenient carrying of flexible bag 15. In the condition shown in Fig. 1, the top portion of bag 15 has been closed off by a pair of substantially horizontal areas of securement 170 and 171. Grip-hole cutout 80 is substantially centrally located between the horizontal areas of securement 170 and 171.

The opening device 17 of flexible paper bag 15 may comprise features similar to those disclosed in commonly assigned U.S. Patent 4,966,286 issued to Muckenfuhs on February 27, 1990 and hereby incorporated herein by reference. In the embodiment illustrated in Fig. 1, opening device 17 comprises a line of weakness 60 which traverses side panel 30 in an area generally coinciding with the uppermost portion of compressed flexible articles 20 and extends in and through top portion 70 and carrying device 71. In the illustrated embodiment, the line of weakness 60 in side panel 30 and top portion 70 and carrying device 71, comprises a substantially continuous line of perforations.

The bag 15 may be filled in a method similar to that disclosed in commonly assigned U.S. Patent 4,934,535 issued to Muckenfuhs on June 19, 1990 and hereby incorporated herein by reference. Once the bag has been filled, bottom seal 51 can be made and the compressed single use diapers 20 will be securely contained within the paper package 15.

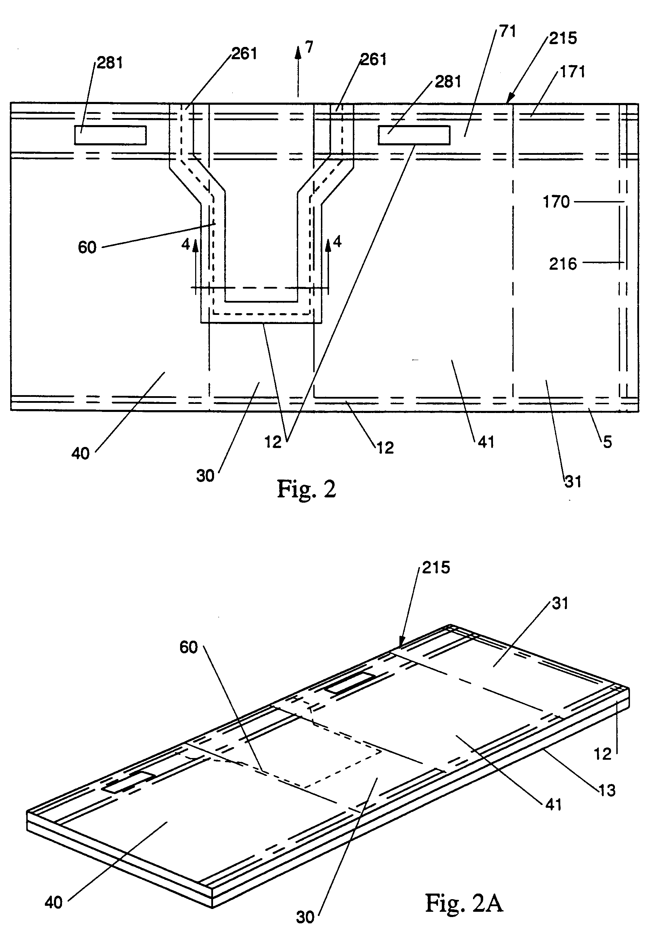

In Fig. 2, a discrete segment 215 of a continuous web of material comprising bag 15 is illustrated. The discrete segment 215 of the continuous web preferably comprises paper or any compostable, recyclable or biodegradable material. The main sections of package 15 are identified by the scorelines outlining side panels 30 and 31, front panel 40 and back panel 41. The line of weakness 60 preferably comprising perforations is shown in side panel 30 and extends in and through top portion 70 and carrying device 71.

The package may be coated in selected areas with polyvinyl alcohol 12. The formulation of the polyvinyl alcohol 12 is most preferably of the type generally disclosed either in U.S. Patent 4,618,648 issued to Marten on October 21, 1986 or U.S. Patent 4,675,360 issued to Marten on June 23, 1987, both of which are hereby incorporated herein by reference.

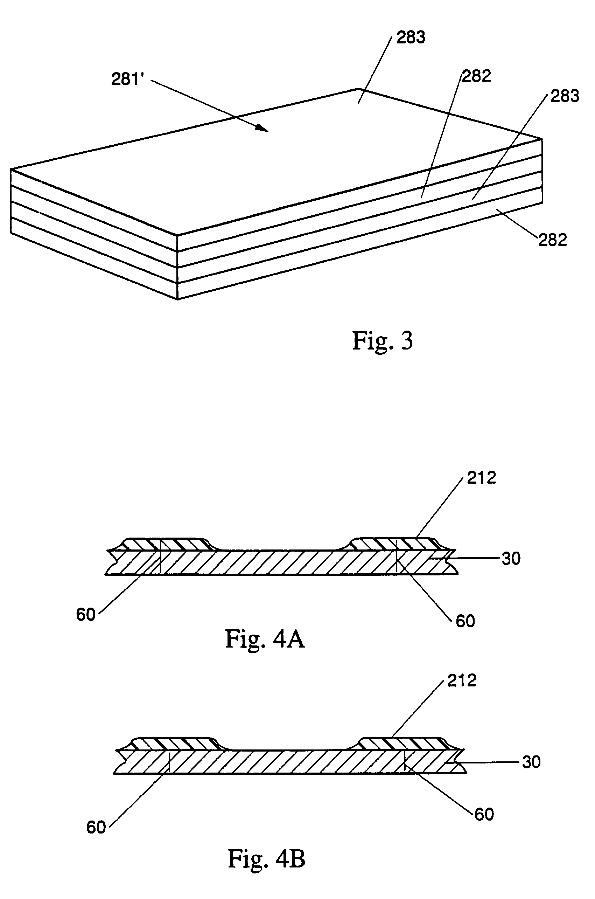

In applying the polyvinyl alcohol 12 to the selected areas of the web 215, the entire web 215 is preferably run through a printing operation on a single pass in the direction indicated by arrow 7 in Fig. 2. During the printing operation, the specific pattern shown in Fig. 2 is printed upon the selected areas of the web 215. Polyvinyl alcohol 12 is preferably printed on those portions of the web used to form side seams 216 which join the side panel 31 to the front panel 40, the bottom seam 51 used to close the bag 15 at its lowermost portion and the substantially horizontal seams 170 and 171 used to form the top portion of bag 15. The polyvinyl alcohol 12 is also pattern printed on the line of weakness 60 comprising perforations to provide additional tensile support for the opening device on side panel 30. The polyvinyl alcohol is preferably pattern printed on the web 215 prior to the line of weakness 60 being cut into side panel 30. The result, shown in Fig. 4A, is that the perforations 60 penetrate both the polyvinyl alcohol 212 and the side panel 30. The polyvinyl alcohol 212 may also be applied after the perforations have been cut into side panel 30, thus giving the result shown in Fig. 4B. The area surrounding grip-hole cutout 80 in carrying device 71 is also preferably pattern printed with polyvinyl alcohol forming handle patch 281. The amount of polyvinyl alcohol applied to the various pattern printed locations of discrete web 215 will vary according to the amount needed to seal, support and reinforce the various portions of paper bag 15.

To facilitate the simplest printing operation, the polyvinyl alcohol 12 applied to the line of weakness 60 preferably comprising perforations has similar characteristics and can in fact be identical to the polyvinyl alcohol used to make side seams 216, substantially horizontal seams 170 and 171, and bottom seam 51. The most critical characteristic for the polyvinyl alcohol used to reinforce the line of weakness 60 is an increased tensile strength without compromising the shearing characteristics of the opening device 17. Thus, it generally comprises a composition having a low molecular weight, a low melt temperature and a broad range of melt characteristics. Ideally, the material 12 comprises a homogeneous structure so that the perforations comprising the line of weakness will perform much like those on a plastic or film package. This insures a more uniform response when force is applied to intentionally separate the perforated area of the package by applying shear forces along the line of perforations.

Grip-hole cutout 80, which is normally provided after the bag has been finally assembled, is also preferably reinforced with polyvinyl alcohol in handle patch 281 so that it does not rupture during transport of the flexible paper bag 15 by the consumer. A substance having a high tensile strength and a low elongation characteristic is preferably used to reinforce the grip-hole cutout 80. The critical criteria in the formulation and processing for the polyvinyl alcohol used for the latter purpose is to strengthen handle patch 281 to prevent failure during transport by the consumer, not to provide uniform tearing.

The discrete web 215 of the continuous material may, if desired, be run through multiple printing passes in order to apply a sufficient amount of polyvinyl alcohol 12 to the web. The multiple passes may apply polyvinyl alcohol 12 to all of the aforementioned portions of web 215 or only to select portions such as handle patch 281, which may require additional support.

In another preferred embodiment of the present invention the flexible package 15 is printed with polyvinyl alcohol on side seals 216, bottom seal 51, substantially horizontal seals 170 and 171 and line of weakness 60 in a predetermined pattern according to the aforementioned techniques. However, the handle patch 281 comprises a different polyvinyl alcohol material than that used for side seals 216, bottom seal 51, substantially horizontal seals 170 and 171, and line of weakness 60. As opposed to the printing method previously mentioned, handle patch 281 may be fastened to carrying device 71 by gluing or lamination or any other suitable means. In such case, the polyvinyl alcohol used in handle patch 281 may also, if desired, be molecularly oriented prior to being fastened on web 215. Molecular orientation of the polyvinyl alcohol prior to application will render it less prone to further elongate and thereby impart higher tensile strength.

The molecular orientation of handle patch 281 can be influenced by its orientation during manufacture. Orientation of film can be accomplished is several ways. The polyvinyl alcohol can be oriented parallel to the direction that it is being dispensed from the roll. It may also be oriented in a cross direction, perpendicular to the direction of the web coming off the roll. The polyvinyl alcohol may be biaxially oriented, that is in both of the aforementioned directions.

Placing the completed patch material 281 such that the molecular orientation of the reinforcing material is perpendicular to the lifting direction, that is mounting the material 281 with its molecular orientation positioned horizontally, i.e., parallel to the bottom panel 50 of the package, provides the greatest lifting reinforcement in the handle area.

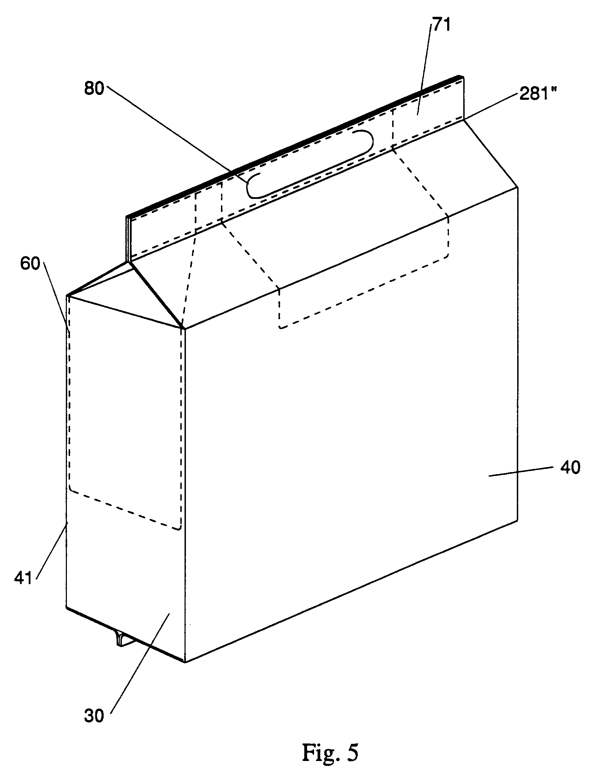

If desired, the handle patch may also be enlarged from that shown in Fig. 2, see, for example, handle patch 281'' which extends into the top portion 70 and into both the front and back panels of the bag 15, shown in Fig. 5, to provide additional support thereto.

In another embodiment, shown in Fig. 2A, the entire web 215, preferably comprising paper 13, is coated with a layer of polyvinyl alcohol 12. This can be done using any combination of the previously mentioned methods. This provides higher overall strength to the entire bag 15 and may allow for a higher compression of the flexible articles 20 to be placed within the bag 15 without increasing the risk of premature rupture. This higher overall strength may be particularly desirable where the flexible articles such as single use diapers are to be double stacked, as suggested in commonly assigned U.S. Patent 4,966,286 issued to Muckenfuhs on February 27, 1990.

A variation of the handle patch 281' is shown in Fig. 3. Here patch 281' comprises multiple layers of polyvinyl alcohol 282 and paper 283 forming a laminate structure. Combinations of paper 283 and polyvinyl alcohol 282 may be used in order to achieve the desired tensile strength in the handle area. The embodiment shown consists of two layers of paper 283 and two layers of polyvinyl alcohol 282. Once this patch structure has been assembled prior to assembly of the overall bag it may be adhered to the packaging material 215 by gluing, heat sealing or laminating to the discrete portion of web 215 around grip-hole cutout 80.

Fig. 4A shows a cross-section of the polyvinyl alcohol 212 applied to line of weakness 60 comprising perforations in side panel 30. The relative ratio of the size of perforations 60 to the amount of polyvinyl alcohol 212 to be applied to perforations 60 can be adjusted to achieve the desired strength to overcome the stress applied by the compressed articles 20 and yet remain relatively easy for consumers to open. In other words, as the stress increases, the relative ratio of polyvinyl alcohol 212 can be increased. Alternatively or additionally, the size of the cut portions of perforations 60 can be reduced. The ideal embodiment will preferably stay closed until opening device 17 is activated by the end user manually grasping a portion of carrying device 71 nearest the side panel 30 and applying a downward twisting and pulling action. The polyvinyl alcohol gives the line of weakness 60 increased tensile strength without significantly impacting the shear forces required to open the package 15. In addition the polyvinyl alcohol will tend to aid tearing along the line of weakness 60 of opening device 17 so it will open in a clean line along the perforations instead of in a random fashion along the randomly oriented paper fibers, as is normally the case for unreinforced perforated paper.

While the use of polyvinyl alcohol has been disclosed herein, reinforcing materials other than polyvinyl alcohol may be employed in practicing the present invention. Such substances are preferably water soluble and capable of performing the aforementioned functions similar to polyvinyl alcohol. In addition they are preferably comprised of a thermoplastic material to facilitate heat sealing as well as compostable, biodegradable or recyclable.

While an easy open flexible bag containing a single stack of compressed flexible articles has been illustrated in the accompanying drawing figures, it is recognized that the present invention may be practiced to advantage in bags employing multiple stacks of compressed flexible articles, i.e., one stack superposed upon another stack. In such case, the bag could be provided with a pair of easy opening features of the type disclosed in the illustrated embodiment, one having a tear initiating point in a substantially untensioned top panel as generally shown in the illustrated embodiment, and the other having a tear initiating point in the tensioned side panel beneath the upper opening feature, as generally disclosed in commonly assigned U.S. Patent 4,966,286 issued to Muckenfuhs on February 27, 1990.

As will be appreciated from the foregoing description of a particularly preferred embodiment to the present invention, easy open flexible bags of compressed flexible articles of the present invention can simultaneously reduce the storage, transportation and handling costs typically encountered with flexible articles which are distributed in a substantially uncompressed condition. In addition, they can substantially reduce the cost of the packaging material required by reducing the quantity of packaging material needed to house an identical number of comparable flexible articles in a substantially uncompressed state. Perhaps best of all, these significant problems of the prior art packaging systems have been overcome while simultaneously providing substantial benefits to the end user not only in the terms of reducing the bulk of the flexible articles prior to actual use, but also in terms of providing highly effective, automatically assisted dispensing of the articles contained within the flexible bag, at least until a substantial portion of the flexible articles have been utilized.

In addition to the aforementioned benefits, another significant benefit of paper bags of the present invention is that they meet the strength and and ease of opening parameters required to package compressed flexible articles such as disposable diapers, yet remain completely recyclable, compostable and biodegradable.

While the present invention has been described in the context of an easy open flexible bag containing flexible compressed single use diapers, it is recognized that the present invention may also be practiced to advantage in many other applications and environments. Furthermore, the degree of compression to be imparted to the articles can be selected at will by the manufacturer, depending upon the desired end use, the tensile strength of the particular material selected for the flexible bag and the yield point of the articles. In addition, the amount of polyvinyl alcohol or other similar reinforcing material employed in conjunction with the paper used to form a package of the present invention can be selected at will by the manufacturer, depending upon the desired end use of the package and the tensile strength of the material selected for the flexible bag.

It will be obvious to those skilled in the art that the various changes and modifications can be made without from departing from the spirit and scope of the present invention and it is intended to cover the appended claims all such modifications that are within the scope of this invention.

## Claims

1. A substantially rectangular package comprised of a material which is recyclable, compostable or biodegradable, said package being filled with compressed flexible articles (20), said package comprising :
(a) a front (40) and a back (41) panel connected to one another by means of a pair of side panels (30,31), a bottom panel and a top panel and
(b) an opening device (17) comprising a line of weakness (60) located at least partially within one of said side panels (30,31) of said package, said line of weakness (60) defining a predetermined portion of said side panel (30) to be at least partially separated from the remainder of said side panel (30) without releasing the tension in the remainder of said side panel (30), said predetermined portion of said side panel being partially separated from the remainder of said side panel (30) by applying a grasping force thereto to produce shearing along said line of weakness (60), whereupon the portion of said flexible articles (20) coinciding with the aperture thus formed in said side panel (30) expand through said aperture in a fan-like array while the portion of said flexible articles (20) coinciding with the remaining tensioned portion of said side panel are retained in a substantially compressed condition until the compressive forces acting upon said articles are substantially relieved by removal of a sufficient number of articles (20) from said package, characterised in that said line of weakness (60) is reinforced against premature tensile failure by a layer (261) of water soluble, thermoplastic, recyclable, compostable or biodegradable material applied over said line of weakness.

2. The package of Claim 1, wherein said opening device comprising a line of weakness (60) located at least partially within one of said side panels (30,31) of said package is coated with a layer of polyvinyl alcohol (12).

3. The package of Claim 1 or Claim 2, wherein said line of weakness (60) in said tensioned side panel (30) comprises perforations.

4. The package according to any one of the preceding Claims, wherein said perforations extend through said side panel (30) and said polyvinyl alcohol (12).

5. The package according to any one of the preceding Claims, further comprising a carrying device (71) extending above said top panel.

6. The package according to any one of the preceding Claims, wherein said carrying device (71) comprises a grip-hole cutout (80) in an extension of said top panel.

7. The package according to any one of the preceding Claims, wherein said grip-hole cutout (80) is reinforced about its periphery by application of a layer of water soluble, thermoplastic, recyclable, compostable of biodegradable material.

8. The package according to any one of the preceding Claims, wherein said grip-hole cutout (80) is reinforced about its periphery by a laminate comprising polyvinyl alcohol and a recyclable, compostable or biodegradable material.

9. The package according to any one of the preceding Claims, wherein said grip-hole cutout (80) is reinforced about its periphery by a molecularly oriented patch (281) of polyvinyl alcohol.

10. The package according to any one of the preceding Claims, further comprising a layer of water soluble, thermoplastic, recyclable, compostable or biodegradable material for sealing the seams of said package.

## Patentansprüche

1. Im wesentlichen rechteckige Verpackung aus einem wiederverwertbaren, kompostierbaren oder bioabbaubaren Material, wobei die Verpackung mit gepreßten flexiblen Artikeln (20) gefüllt wird, welche Verpackung:
(a) eine Vorder- (40) und eine Rückwand (41), welche durch ein Paar Seitenwände (30, 31), eine Bodenwand und eine Oberwand miteinander verbunden sind, und
(b) eine Öffnungsvorrichtung (17), welche eine zumindest teilweise innerhalb einer der Seitenwände (30, 31) der Verpackung angeordnete Schwachstellenlinie (60) umfaßt, wobei die Schwachstellenlinie (60) einen vorbestimmten Bereich der Seitenwand (30) definiert, welcher zumindest teilweise von der restlichen Seitenwand (30) abgetrennt wird, ohne die Spannung in der restlichen Seitenwand (30) abfallen zu lassen, wobei der vorbestimmte Bereich der Seitenwand dadurch teilweise von der restlichen Seitenwand (30) abgetrennt wird, daß eine Greifkraft daran angelegt wird, um entlang der Schwachstellenlinie (60) eine Scherung zu erzeugen. woraufhin der Teil der flexiblen Artikel (20), welcher mit der so in der Seitenwand (30) gebildeten Öffnung übereinstimmt, sich in einer fächerartigen Anordnung durch diese Öffnung ausdehnt, während der Teil der flexiblen Artikel (20), welcher mit dem restlichen, unter Spannung befindlichen Bereich der Seitenwand übereinstimmt, in im wesentlichen zusammengedrückten Zustand zurückgehalten wird, bis die Druckkräfte, welche auf die Artikel wirken, durch Entfernung einer ausreichenden Zahl von Artikeln (20) aus der Verpackung im wesentlichen entspannt sind, umfaßt, **dadurch gekennzeichnet**, daß die Schwachstellenlinie (60) durch eine Schicht (261) aus einem wasserlöslichen, thermoplastischen, wiederverwertbaren, kompostierbaren oder bioabbaubaren Material, welche über der Schwachstellenlinie aufgebracht ist, gegen vorzeitiges Zugversagen verstärkt ist.

2. Verpackung nach Anspruch 1, wobei die Öffnungsvorrichtung, welche eine zumindest teilweise innerhalb einer der Seitenwände (30, 31) der Verpackung angeordnete Schwachstellenlinie (60) umfaßt, mit einer Schicht aus Polyvinylalkohol (12) beschichtet ist.

3. Verpackung nach Anspruch 1 oder 2, wobei die Schwachstellenlinie (60) in der unter Spannung befindlichen Seitenwand (30) Perforationen umfaßt.

4. Verpackung nach mindestens einem der vorangehenden Ansprüche, wobei die Perforationen sich durch die Seitenwand (30) und den Polyvinylalkohol (12) erstrecken.

5. Verpackung nach mindestens einem der vorangehenden Ansprüche, umfassend weiterhin eine Tragevorrichtung (71), welche sich über der Oberwand erstreckt.

6. Verpackung nach mindestens einem der vorangehenden Ansprüche. wobei die Tragevorrichtung (71) einen Griffloch-Ausschnitt (80) in einer Ausdehnung der Oberwand umfaßt.

7. Verpackung nach mindestens einem der vorangehenden Ansprüche, wobei der Griffloch-Ausschnitt (80) durch Aufbringung einer Schicht aus einem wasserlöslichen, thermoplastischen, wiederverwertbaren, kompostierbaren oder bloabbaubaren Material um seinen Rand herum verstärkt ist.

8. Verpackung nach mindestens einem der vorangehenden Ansprüche, wobei der Griffloch-Ausschnitt (80) durch ein Laminat, welche Polyvinylalkohol und ein wiederverwertbares, kompostierbares oder bioabbaubares Material umfaßt, um seinen Rand herum verstärkt ist.

9. Verpackung nach mindestens einem dervorangehenden Ansprüche, wobei der Griffloch-Ausschnitt (80) durch ein molekularorientiertes Pflaster (281) aus Polyvinylalkohol um seinen Rand herum verstärkt ist.

10. Verpackung nach mindestens einem der vorangehenden Ansprüche, umfassend weiterhin eine Schicht aus einem wasserlöslichen, thermoplastischen, wiederverwertbaren, kompostierbaren oder bioabbaubaren Material zum Abdichten der Nähte der Verpackung.

## Revendications

1. Un emballage à peu près rectangulaire constitué d'un matériau qui est recyclable, susceptible d'être composté, ou biodégradable, ledit emballage étant rempli avec des articles flexibles, comprimés (20), ledit emballage comprenant :
(a) un panneau avant (40) et un panneau arrière (41) reliés l'un à l'autre par l'intermédiaire d'une paire de panneaux de côté (30, 31), un panneau de fond et un panneau de dessus et
(b) un dispositif d'ouverture (17) comprenant une ligne d'affaiblissement (60) disposée, au moins partiellement, dans l'un desdits panneaux de côté (30, 31) dudit emballage, ladite ligne d'affaiblissement (60) délimitant une partie prédéterminée dudit panneau de côté (30) pour être, au moins partiellement, séparée du reste dudit panneau de côté (30) sans relâcher la tension dans le reste dudit panneau de côté (30), ladite partie prédéterminée dudit panneau de côté étant séparée, partiellement du reste dudit panneau de côté (30) en appliquant une force de préhension sur celui-ci pour produire un déchirement le long de ladite ligne d'affaiblissement (60), grâce à quoi la partie desdits articles flexibles (20) coïncidant avec l'ouverture ainsi formée dans ledit panneau de côté (30) se dilate à travers ladite ouverture suivant une disposition analogue à un éventail alors que la partie desdits articles flexibles (20) coïncidant avec la partie restant sous tension dudit panneau de côté est maintenue dans une condition sensiblement comprimée jusqu'à ce que les forces de compression agissant sur lesdits articles soient pratiquement dégagées par le retrait d'un nombre suffisant d'articles (20) dudit emballage, caractérisé en ce que ladite ligne d'affaiblissement (60) est renforcée vis-à-vis d'un défaut de tension prématuré par une couche (261) d'un matériau soluble dans l'eau, thermoplastique, recyclable, susceptible d'être composté ou biodégradable appliquée sur ladite ligne d'affaiblissement.

2. L'emballage selon la revendication 1, dans lequel ledit dispositif d'ouverture comprenant une ligne d'affaiblissement (60) disposée, au moins partiellement, dans l'un desdits panneaux de côté (30, 31) dudit emballage est revêtu d'une couche d'alcool polyvinylique (12).

3. L'emballage selon la revendication 1 ou 2, dans lequel ladite ligne d'affaiblissement (60) dans ledit panneau de côté sous tension (30) comporte des perforations.

4. L'emballage selon l'une quelconque des revendications précédentes, dans lequel lesdites perforations s'étendent à travers ledit panneau de côté (30) et ledit alcool polyvinylique (12).

5. L'emballage selon l'une quelconque des revendications précédentes, comportant, en outre, un dispositif de transport (71) s'étendant au-dessus dudit panneau de dessus.

6. L'emballage selon l'une quelconque des revendications précédentes, dans lequel ledit dispositif de transport (71) comporte une découpe en forme de trou de saisie (80) dans un prolongement dudit panneau de dessus.

7. L'emballage selon l'une quelconque des revendications précédentes, dans lequel ladite découpe en forme de trou de saisie (80) est renforcée autour de sa périphérie par l'application d'une couche d'un matériau soluble dans l'eau, thermoplastique, recyclable, susceptible d'être composté ou biodégradable.

8. L'emballage selon l'une quelconque des revendications précédentes, dans lequel ladite découpe en forme de trou de saisie (80) est renforcée autour de sa périphérie par un stratifié comprenant de l'alcool polyvinylique et un matériau recyclable, susceptible d'être composté ou biodégradable.

9. L'emballage selon l'une quelconque des revendications précédentes, dans lequel ladite découpe en forme de trou de saisie (80) est renforcée autour de sa périphérie par une pièce (281) d'alcool polyvinylique orienté moléculairement.

10. L'emballage selon l'une quelconque des revendications précédentes, comportant, en outre, une couche d'un matériau soluble dans l'eau, thermoplastique, recyclable, susceptible d'être composté ou biodégradable pour la fermeture étanche des jointures dudit emballage.
